# FASCICULE DE BREVET EUROPEEN

(11) **EP 0 948 146 B1**
(45) Date de publication et mention de la délivrance du brevet: **03.06.2009**
(21) Numéro de dépôt: 99400753.2
(22) Date de dépôt: 29.03.1999
(51) Int. Cl.: H04B 7/185, H04B 7/005

(54) **Compensation de dynamique des signaux pour répéteur de télécommunications spatiales**
Dynamikbereich-Kompensation von Signalen für Satellitenwiederholer
Dynamic range compensation of signals for satellite communications repeater

(30) Priorité: 30.03.1998 FR 9803897
(43) Date de publication de la demande: 06.10.1999
(73) Titulaire: Thales, 92200 Neuilly-sur-Seine (FR)
(72) Inventeur: Lenormand, Régis, 31700 Blagnac (FR); Belis, Eric Clément, 31100 Toulouse (FR); Bouin, Jean, 31000 Toulouse (FR); Delamotte, Luc, 31400 Toulouse (FR); Rigal, Chistian, 31100 Toulouse (FR); Aveline, Muriel, 31100 Toulouse (FR)
(74) Mandataire: Esselin, Sophie

(56) Documents cités:
- EP-A- 0 668 666
- EP-A- 0 805 568
- US-A- 5 568 086
- CRAIG A D ET AL: "DIGITAL SIGNAL PROCESSING IN COMMUNICATIONS SATELLITE PAYLOADS" ELECTRONICS AND COMMUNICATION ENGINEERING JOURNAL, vol. 4, no. 3, 1 juin 1992, pages 107-114, XP000307314

## Description

La présente invention a pour objet un satellite pour un système de télécommunications. Elle a aussi pour objet un procédé de compensation de dynamique des signaux pour un tel satellite.

L'invention concerne le domaine des télécommunications par satellites, et plus précisément les répéteurs des systèmes de télécommunications spatiales. Dans de tels systèmes de télécommunications, les signaux transmis par les satellites ou répéteurs vers les stations terrestres, sont atténués différemment, et sont reçus avec des différences de puissance importantes. Ces différences sont d'autant plus fortes que la fréquence est élevée, et peuvent atteindre 20 dB à 30 GHz, dans le cas de fortes précipitations locales.

Les contraintes sur le coût des équipements, et notamment des équipements mobiles pour de tels systèmes de télécommunications par satellites, conduisent par ailleurs à une diminution des capacités des équipements; ceux ci ne peuvent alors pas compenser des pertes de puissance aussi élevées. Cet état de fait est particulièrement critique pour les systèmes satellitaires futurs travaillant en bande Ka; pour de tels systèmes, la taille de couverture par un satellite donné a une dimension largement supérieure à la dimension typique de tels phénomènes climatiques. Ainsi, dans le canal de transmission descendant cohabitent des signaux présentant des différences de niveau pouvant atteindre 20 dB, pour des débits d'information similaires. De telles valeurs de différences de puissance rendent critiques les phénomènes de couplage parasite, et accentuent l'impact des non-linéarités d'amplification.

De tels problèmes d'atténuation se posent aussi pour les liaisons montantes, pour lesquelles de telles différences de niveau peuvent se produire.

EP-A-0 289 130 décrit le problème des produits d'intermodulation entre des fréquences différentes d'un émetteur radio, du fait des non-linéarités de l'amplificateur de puissance; il propose de prévoir une série de circuits de prédistorsion, l'un des circuits au choix étant susceptible d'être connecté en aval du dispositif de mixage de l'émetteur, et en amont de l'amplificateur de puissance et de l'antenne. Le circuit de prédistorsion utilisé est sélectionné en fonction de la fréquence du signal à transmettre, et induit dans les signaux des distorsions opposées à celles induites par l'amplificateur pour la plage de fréquence considérée. On arrive ainsi à réduire les produits d'intermodulation entre les différentes fréquences, à des niveaux inférieurs à 40 dB. Ce document ne suggère qu'une précompensation variant en fonction de la fréquence, pour assurer une linéarité d'amplification du signal sur toute la bande utile.

Une compensation telle que celle proposée dans le EP-A-0 289 130 n'est pas suffisante dans le cas d'un répéteur de télécommunications spatiales, dans la mesure où elle permet au mieux de compenser les différences d'atténuation sur la partie montante de la transmission. Pour la liaison descendante, les mêmes problèmes d'atténuation de la liaison se posent: un signal transmis dans une zone de fortes précipitations est plus atténué, ce qui augmente la dynamique du signal reçu sur les équipements terrestres.

Le document EP 0 805 568 décrit une méthode et un dispositif de contrôle de puissance permettant de limiter la dynamique du signal reçu sur les équipements terrestres. A cet effet, l'équipement au sol comporte une boucle de contrôle agissant sur l'ensemble du système. Cette configuration présente l'avantage de fournir des résultats précis sur la limitation de la dynamique du signal reçu sur les équipements terrestres, mais l'inconvénient de faire appel à une structure complexe nécessitant une modification conséquente de l'équipement au sol sans avoir une action transparente sur les signaux transmis.

L'invention propose une solution au problème des fluctuations d'atténuation des différents signaux dans un système de télécommunications spatiales; elle propose une solution qui permette non seulement de compenser les différences d'atténuation sur la partie montante de la transmission, mais aussi de précompenser les différences d'atténuation sur la partie descendante de la transmission, et ce sans modifier l'équipement au sol et sans perturber l'architecture du satellite.

Plus précisément, l'invention propose un satellite d'un système de télécommunications par satellite, comprenant des moyens d'émission de signaux à des puissances différentes sur la liaison descendante, permettant d'effectuer, dans le satellite, un traitement numérique transparent de ces signaux, tel que les puissances sont choisies de sorte à limiter la dynamique relative des signaux à la réception sur la liaison descendante.

On entend par traitement transparent un traitement qui ne modifie pas la forme d'onde du signal et qui agit donc de manière transparente vis à vis des informations transmises par le satellite. Notamment c'est un traitement qui ne comporte pas d'étape de codage ou de décodage, de modulation ou de démodulation.

Avantageusement, la dynamique relative des signaux à la réception sur la liaison descendante est inférieure à 5 dB, de préférence inférieure à 2 dB.

Dans un mode de réalisation, les moyens d'émission comprennent au moins deux amplificateurs, et des moyens de routage des signaux vers les amplificateurs en fonction de la puissance d'émission à appliquer aux signaux.

De préférence, le satellite comprend des moyens de compensation des différences de puissance des signaux appliqués à un amplificateur donné.

Dans un mode de réalisation, les moyens d'émission comprennent un convertisseur analogique numérique, des moyens de transformation de Fourier rapide des signaux convertis, des moyens de contrôle du gain des signaux, et des moyens d'acheminement des signaux vers au moins deux chaînes d'amplification, comprenant chacune des moyens de transformation de Fourier rapide inverse, un convertisseur analogique numérique et un amplificateur de puissance.

L'invention propose en outre un procédé de compensation de dynamique des signaux pour répéteur numérique transparent de télécommunications spatiales, comprenant une étape de séparation des signaux reçus en au moins deux groupes et une étape d'émission des signaux desdits groupes à des puissances différentes selon les groupes, les puissances étant choisies de sorte à limiter la dynamique relative des signaux à la réception sur la liaison descendante.

Avantageusement, la dynamique relative des signaux à la réception sur la liaison descendante est inférieure à 5 dB, de préférence inférieure à 2 dB.

Dans un mode de réalisation, l'étape d'émission des signaux d'un groupe comprend une étape d'égalisation des puissances des signaux du groupe et une étape d'amplification des signaux.

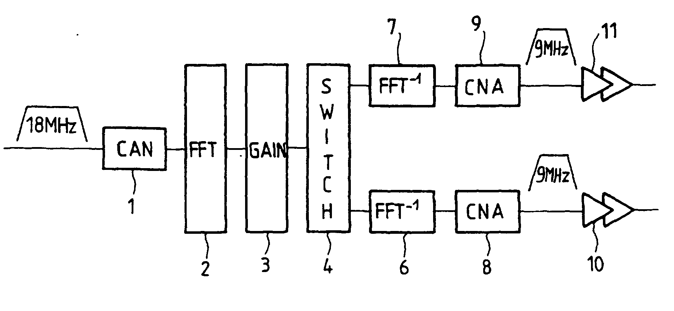

D'autres caractéristiques et avantages de l'invention apparaîtront à la lecture de la description qui suit de modes de réalisation de l'invention, donnée à titre d'exemple et en référence aux dessins annexés qui montrent sur la figure unique, une vue schématique d'un circuit de compensation selon l'invention.

L'invention propose, pour limiter la dynamique d'atténuation des signaux sur la liaison descendante, ainsi que le cas échéant sur la liaison montante, d'amplifier différemment les signaux dans la chaîne de puissance d'un satellite. Ce traitement numérique transparent permet de précompenser la dynamique d'atténuation sur la liaison descendante, et permet par exemple de transmettre avec une puissance supérieure les signaux destinés à être reçus dans une zone de fortes précipitations, ou plus généralement, dans une zone où l'atténuation de puissance est plus importante, et ce sans modifier l'architecture de l'équipement au sol. La différence de puissance entre les différents signaux, à l'émission par le satellite, peut varier en fonction des fluctuations d'atténuation prévue sur la liaison descendante: une valeur de 18 dB pour des valeurs de puissance voisines de 20 GHz permet par exemple de compenser de fortes précipitations, par rapport à un débit d'information identique dans une zone ce ciel clair. De préférence, la dynamique à la réception sur la liaison descendante est inférieure à 5 dB, de préférence inférieure à 2dB. A titre de comparaison, comme indiqué plus haut, la dynamique à la réception dans les dispositifs de l'art antérieur peut atteindre 18 ou 20 dB.

Le choix du niveau d'amplification des signaux ou des différents niveaux de puissance peut être effectué de différentes façons. On peut utiliser pour cela des informations transmises par les stations terrestres vers le répéteur spatial, indiquant les différentes atténuations. On peut aussi régler les niveaux de puissance en fonction du niveau des signaux reçus par le répéteur dans les zones d'émission sur la liaison montante. On arrive ainsi à déterminer quels doivent être les niveaux de puissance appliquées à l'émission sur la liaison descendante pour précompenser les fluctuations d'atténuation sur cette liaison descendante, i. e. pour limiter la dynamique des signaux sur la liaison descendante. Le choix spécifique des différents niveaux de puissance dépend du répéteur en cause, et des condition de propagation sur la liaison descendante.

Le résultat est que les équipements terrestres ne sont pas modifiés et reçoivent des signaux d'une puissance sensiblement identique, et ce malgré des conditions locales différentes au niveau des différents équipements terrestres. Ceci permet, pour des équipements tels que des terminaux mobiles, d'assurer une réception correcte des signaux sur la liaison descendante, en limitant le coût de l'équipement. Le résultat peut facilement être vérifié par mesure des niveaux de puissance à la réception sur la liaison descendante.

Avantageusement, l'invention propose de conserver une performance de linéarité constante, en utilisant des amplificateurs différents pour les différents niveaux de puissance émis. Ceci permet de limiter l'impact des non linéarités d'amplification; dans le cas d'un amplificateur unique, l'application de signaux de niveaux très différents pourrait en effet être pénalisante. On prévoit alors outre les différents amplificateurs, des moyens de routage des signaux vers les amplificateurs en fonction du niveau de puissance qu'il convient de leur appliquer. Ainsi, on applique à un groupe de signaux appliqué à un amplificateur donné le niveau de puissance permettant de précompenser les fluctuations d'atténuation sur la liaison descendante pour le groupe, par rapport aux signaux d'un autre groupe.

La figure unique montre une vue schématique d'un circuit d'amplification selon l'invention, qui peut être utilisé pour la mise en oeuvre de l'invention. Le circuit d'amplification de la figure propose d'amplifier les signaux sur deux amplificateurs distincts. Le circuit de la figure comprend un convertisseur analogique numérique 1 qui reçoit en entrée les signaux analogiques reçus par le répéteur. La bande totale de ces signaux est typiquement de 18 MHz.

Les signaux numériques obtenus sont transmis à des moyens de transformation de Fourier rapide 2 qui leur font subir une transformation de Fourier rapide.

Les signaux dans le domaine fréquentiel sont transmis à des moyens de contrôle de gain 3, qui effectuent la précompensation de la liaison descendante, et le cas échéant la compensation de la liaison montante. Pour cela, les moyens de contrôle du gain peuvent égaliser le gain des différents signaux reçus sur la liaison montante, et font varier le gain des signaux en fonction des fluctuations d'atténuation attendue ou prévue sur la liaison descendante. Cette précompensation de la liaison descendante peut être déterminée de différentes façons, comme expliqué plus haut. Dans le cas de la figure, où l'on utilise deux amplificateurs, on peut utiliser une valeur de gain pour chaque amplificateur, et simplement choisir pour chaque signal à émettre une de ces valeurs. On peut aussi choisir la valeur du gain en tenant compte des non-linéarités d'amplification de chacun des amplificateurs, pour assurer une performance de linéarité constante dans chacun des amplificateurs.

Les signaux fournis par les moyens de contrôle du gain 3 sont ensuite fournis à des moyens d'acheminement 4, indiqués sur la figure par la référence SWITCH. Les moyens d'acheminement routent les différents signaux vers l'une ou l'autre des deux chaînes d'amplification, en fonction de la puissance des signaux; pour cela les moyens d'acheminement regroupent les signaux en leur affectant les fréquences correspondant aux différentes chaînes d'amplification.

Chacune des chaînes d'amplification comprend des moyens de transformation de Fourier inverse FFT⁻¹ 6 ou 7, qui sont suivis d'un convertisseur numérique analogique 8 ou 9 et d'un amplificateur de puissance 10 ou 11. Chaque chaîne d'amplification reçoit de la part des moyens d'acheminement des signaux à émettre à un niveau donné de puissance; les signaux fournis sur une chaîne d'amplification par les moyens d'acheminement sont retransformés par transformation de Fourier inverse. Les signaux dans le domaine temporel obtenus sont convertis en signaux analogiques, amplifiés dans l'amplificateur de puissance et émis par le répéteur. Chaque chaîne d'amplification émet des signaux sur une bande de 9 MHz, correspondant à la moitié de la bande initiale reçue par le répéteur.

Le circuit de la figure permet ainsi d'émettre depuis un répéteur d'un système de télécommunications spatiales des signaux présentant une dynamique qui compense les fluctuations d'atténuation sur la liaison montante et qui précompense les fluctuations d'atténuation sur la liaison descendante. Ceci est assuré par un routage dynamique des signaux reçus vers l'une ou l'autre des chaînes d'amplification, en fonction du niveau de puissance nécessaire.

L'invention s'applique aux systèmes de télécommunications par satellites, tels que les systèmes multimédia.

Bien entendu, la présente invention n'est pas limitée aux exemples et modes de réalisation décrits et représentés, mais elle est susceptible de nombreuses variantes accessibles à l'homme de l'art. Ainsi, l'invention a été décrite dans le cas d'un circuit présentant deux chaînes d'amplification; il est clair que l'on peut faire varier le nombre de chaînes d'amplification utilisées; dans ce cas, les moyens d'acheminement séparent et regroupent les signaux en fonction du nombre d'amplificateurs et du nombre de niveaux de puissance requis.

## Revendications

1. Système de compensation de dynamique des signaux pour un satellite d'un système de télécommunications par satellite, comprenant :
- des moyens de réception de différents signaux à émettre,
- des moyens d'émission des signaux reçus sur au moins une liaison descendante,
**Caractérisé en ce que** les moyens d'émission comportent :
- des moyens d'acheminement (4) pour séparer les différents signaux reçus en au moins deux groupes,
- au moins deux amplificateurs de puissance différents (10, 11) pour appliquer des niveaux de puissance différents aux deux groupes de signaux,
Chacun des groupes de signaux étant acheminé par les moyens d'acheminement (4) vers l'un ou l'autre des amplificateurs (10, 11), en fonction du niveau de puissance à appliquer audit groupe de signaux à émettre, le niveau de puissance appliqué à chaque groupe de signaux étant choisi de sorte à pré-compenser les différences d'atténuation de puissance des différents signaux et limiter ainsi la dynamique relative des signaux à la réception sur la liaison descendante.

2. Système selon la revendication 1, **caractérisé en ce que** la dynamique relative des signaux à la réception sur la liaison descendante est inférieure à 5 dB, de préférence inférieure à 2 dB.

3. Système selon l'une des revendications 1 ou 2, **caractérisé en ce qu'**il comporte en outre des moyens de compensation des différences de puissance des signaux appliqués à un amplificateur donné.

4. Système selon l'une des revendications 1 à 3, **caractérisé en ce que** les moyens d'émission comprennent un convertisseur analogique numérique (1), des moyens de transformation de Fourier rapide (2) des signaux convertis, des moyens de contrôle du gain des signaux (3), des moyens d'acheminement des signaux (4) vers au moins deux chaînes d'amplification, comprenant chacune des moyens de transformation de Fourier rapide Inverse (6, 7), un convertisseur analogique numérique (8, 9) et un amplificateur de puissance (10, 11).

5. Satellite d'un système de télécommunications par satellite, **caractérisé en ce qu'**il comporte un système de compensation de dynamique des signaux selon l'une des revendications précédentes

6. Procédé de compensation de dynamique des signaux pour un satellite d'un système de télécommunications par satellite, **caractérisé en ce qu'**il comprend une étape de séparation des signaux reçus en au moins deux groupes et d'acheminement de chacun des groupes de signaux vers un amplificateur choisi parmi au moins deux amplificateurs différents pour appliquer des niveaux de puissance différents aux deux groupes de signaux une étape d'émission des signaux desdits groupes à des puissances différentes selon les groupes, les puissances étant choisies de sorte à limiter la dynamique relative des signaux à la réception sur la liaison descendante.

7. Procédé selon la revendication 6, **caractérisé en ce que** la dynamique relative des signaux à la réception sur la liaison descendante est inférieure à 5 dB, de préférence inférieure à 2 dB.

8. Procédé selon l'une des revendications 6 ou 7, **caractérisé en ce que** l'étape d'émission des signaux d'un groupe comprend une étape d'égalisation des puissances des signaux du groupe et une étape d'amplification des signaux.

## Claims

1. System for dynamic range compensation of signals for a satellite of a satellite-based telecommunications system, comprising:
- means for receiving various signals to be transmitted,
- means for transmitting the signals received on at least one downlink,
**characterized in that** the transmitting means comprise:
- trunking means (4) for separating the various signals received into at least two groups,
- at least two different power amplifiers (10, 11) for applying different power levels to the two groups of signals,
each of the groups of signals being trunked by the trunking means (4) to one or the other of the amplifiers (10, 11), as a function of the power level to be applied to said group of signals to be transmitted, the power level applied to each group of signals being chosen so as to pre-compensate for the differences in power attenuation of the various signals and thus to limit the relative dynamic range of the signals on reception on the downlink.

2. System according to Claim 1, **characterized in that** the relative dynamic range of the signals on reception on the downlink is less than 5 dB, preferably less than 2 dB.

3. System according to one of Claims 1 or 2, **characterized in that** it furthermore comprises means for compensating for the differences in power of the signals applied to a given amplifier.

4. System according to one of Claims 1 to 3, **characterized in that** the transmitting means comprise an analogue digital converter (1), means for fast Fourier transformation (2) of the converted signals, means for controlling the gain of the signals (3), means for trunking the signals (4) to at least two amplifying chains, each chain comprising inverse fast Fourier transformation means (6, 7), an analogue digital converter (8, 9) and a power amplifier (10, 11).

5. Satellite of a satellite-based telecommunications system, **characterized in that** it comprises a system for dynamic range compensation of signals according to one of the preceding claims.

6. Method of dynamic range compensation of signals for a satellite of a satellite-based telecommunications system, **characterized in that** it comprises a step of separating the signals received into at least two groups and of trunking each of the groups of signals to an amplifier chosen from at least two different amplifiers so as to apply different power levels to the two groups of signals, a step of transmitting the signals of said groups at different powers according to the groups, the powers being chosen so as to limit the relative dynamic range of the signals on reception on the downlink.

7. Method according to Claim 6, **characterized in that** the relative dynamic range of the signals on reception on the downlink is less than 5 dB, preferably less than 2 dB.

8. Method according to one of Claims 6 or 7, **characterized in that** the step of transmitting the signals of a group comprises a step of equalizing the powers of the signals of the group and a step of amplifying the signals.

## Patentansprüche

1. System zur Dynamikkompensation der Signale für einen Satelliten eines Satelliten-Telekommunikationssystems, das aufweist:
- Empfangseinrichtungen für verschiedene zu sendende Signale,
- Sendeeinrichtungen der empfangenen Signale auf mindestens einer Abwärtsverbindung,
**dadurch gekennzeichnet, dass** die Sendeeinrichtungen aufweisen:
- Weiterleitungseinrichtungen (4), um die verschiedenen empfangenen Signale in mindestens zwei Gruppen aufzuteilen,
- mindestens zwei verschiedene Leistungsverstärker (10, 11), um verschiedene Leistungspegel an die zwei Signalgruppen anzulegen,
wobei jede der Signalgruppen von den Weiterleitungseinrichtungen (4) in Abhängigkeit von dem an die zu sendende Signalgruppe anzulegenden Leistungspegel zu dem einen oder dem anderen der Verstärker (10, 11) weitergeleitet wird, wobei der an jede Signalgruppe angelegte Leistungspegel ausgewählt wird, um die Leistungsdämpfungsunterschiede der verschiedenen Signale vorab zu kompensieren und so die relative Dynamik der Signale beim Empfang auf der Abwärtsleitung zu begrenzen.

2. System nach Anspruch 1, **dadurch gekennzeichnet, dass** die relative Dynamik der Signale beim Empfang auf der Abwärtsverbindung geringer als 5 dB, vorzugsweise geringer als 2 dB ist.

3. System nach einem der Ansprüche 1 oder 2, **dadurch gekennzeichnet, dass** es außerdem Einrichtungen zur Kompensation der Leistungsunterschiede der an einen gegebenen Verstärker angelegten Signale aufweist.

4. System nach einem der Ansprüche 1 bis 3, **dadurch gekennzeichnet, dass** die Sendeeinrichtungen einen Analog/Digital-Wandler (1), Einrichtungen zur schnellen Fourier-Transformation (2) der umgewandelten Signale, Einrichtungen zur Überwachung der Verstärkung der Signale (3), Einrichtungen zur Weiterleitung der Signale (4) zu mindestens zwei Verstärkungsketten aufweisen, die je Einrichtungen zur schnellen inversen Fourier-Transformation (6, 7), einen Analog/DigitalWandler (8, 9) und einen Leistungsverstärker (10, 11) aufweisen.

5. Satellit eines Satelliten-Telekommunikationssystems, **dadurch gekennzeichnet, dass** er ein System zur Dynamikkompensation der Signale nach einem der vorhergehenden Ansprüche aufweist.

6. Verfahren zur Dynamikkompensation der Signale für einen Satelliten eines Satelliten-Telekommunikationssystems, **dadurch gekennzeichnet, dass** es einen Schritt der Aufteilung der empfangenen Signale in mindestens zwei Gruppen und der Weiterleitung jeder der Signalgruppen zu einem Verstärker, der aus mindestens zwei verschiedenen Verstärkern ausgewählt wird, um unterschiedliche Leistungspegel an die zwei Signalgruppen anzulegen, und einen Schritt des Sendens der Signale der Gruppen mit unterschiedlichen Leistungen je nach den Gruppen aufweist, wobei die Leistungen gewählt werden, um die relative Dynamik der Signale beim Empfang auf der Abwärtsleitung zu begrenzen.

7. Verfahren nach Anspruch 6, **dadurch gekennzeichnet, dass** die relative Dynamik der Signale beim Empfang auf der Abwärtsleitung unter 5 dB, vorzugsweise unter 2 dB liegt.

8. Verfahren nach einem der Ansprüche 6 oder 7, **dadurch gekennzeichnet, dass** der Schritt des Sendens der Signale einer Gruppe einen Schritt der Entzerrung der Leistungen der Signale der Gruppe und einen Schritt der Verstärkung der Signale aufweist.
